(19) Europäisches Patentamt
European Patent Office
Office européen des brevets

(11) Publication number: **0 112 385 B1**

(12) # EUROPEAN PATENT SPECIFICATION

(45) Date of publication of patent specification: **18.05.88**

(51) Int. Cl.⁴: **C 01 B 33/02,** C 09 C 3/00

(21) Application number: **83902371.0**

(22) Date of filing: **20.06.83**

(86) International application number:
**PCT/US83/00944**

(87) International publication number:
**WO 84/00156 19.01.84 Gazette 84/02**

(54) **APPARATUS AND PROCESS FOR MAKING SOLAR GRADE SILICON.**

(30) Priority: **22.06.82 US 390920**

(43) Date of publication of application:
**04.07.84 Bulletin 84/27**

(45) Publication of the grant of the patent:
**18.05.88 Bulletin 88/20**

(84) Designated Contracting States:
**AT BE CH DE FR GB LI LU NL SE**

(56) References cited:
**DE-B-1 045 995**
**DE-B-2 626 446**
**DE-C- 752 280**
**GB-A- 745 698**
**US-A-3 069 241**
**US-A-3 078 150**
**US-A-4 176 166**
**US-A-4 342 284**
**US-A-4 343 772**

**Patent Abstracts of Japan vol. 3, no. 147, 5 December 1979 page 60C66**
**DOE/JPL 954471 79/12, issued 10 December 1979, Nanis et al.**

**ERDA/JPL 954471-77/3, issued November 1978, Kapur et al.**

(73) Proprietor: **LEVIN, Harry**
**19831 Friar Street**
**Woodland Hills, CA 91367 (US)**

(72) Inventor: **LEVIN, Harry**
**19831 Friar Street**
**Woodland Hills, CA 91367 (US)**

(74) Representative: **Madgwick, Paul Roland et al**
**Ladas & Parry Isartorplatz 5**
**D-8000 München 2 (DE)**

**EP 0 112 385 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

1. Field of the invention

The present invention is directed to a process and apparatus for making solar and semiconductor grade silicon by thermal reaction of a suitable precursor gas composition. More particularly, the present invention is directed to a process and apparatus for continuous production of solar and semiconductor grade silicon in the liquid phase, by thermal decomposition of a suitable precursor gas, such as silane.

2. Brief description of the prior art

As is well known, highly pure elemental silicon properly doped with minute quantities of suitable doping agents, is the most widely used semiconductor and solar cell material. In view of the recent trend of increasing reliance on solar energy, there exists a significant demand for solar cell grade silicon at a resonable cost. In fact, the present unavailability of solar cell grade silicon at a reasonable cost represents the principal factor which presently still renders solar cells too expensive for large-scale electrical power generation.

Solar cell or semiconductor grade (hereinafter solar grade) silicon is usually manufactured in a two-step chemical process. First, solid silicon compounds abundantly available from the Earth's crust (such as $SiO_2$) are converted into gaseous or low boiling liquid silicon compounds such as silicon tetrachloride ($SiCl_4$), trichlorosilane ($SiHCl_3$) and silane ($SiH_4$). The gaseous or liquid silicon compounds are then relatively readily purified by fractional distillation or like processes.

In the next step of preparing elemental silicon of solar grade purity, the purified silicon compound is reacted in gaseous phase to yield elemental silicon, and usually a gaseous by-product. For example, silane gas is thermally decomposed in accordance with Equation I to yield silicon and hydrogen gas.

$$SiH_4 \xrightarrow[\text{heat}]{} Si+2H_2 \qquad \text{Equation I}$$

The above-summarized processes have, hitherto, been performed in the prior art to yield solid elemental silicon. Often, the processes yield very low overall-density agglomerated particles of silicon which are hard to handle in an efficient and continuous manner. Other examples of problems associated with the gas-to-solid thermal reaction processes are: undesirable deposition of a hard silicon crust on the reactor walls, and frequent interruption of the process due to the above-noted and other problems. For example, in accordance with the most widely used prior art "Moisson" process for chemical preparation of solar grade silicon, elemental silicon is grown epitaxially on the surface of rods disposed in a reactor wherein trichlorosilane ($SiHCl_3$) and hydrogen ($H_2$) gases are reacted. However, even this process must be interrupted from time to time in order to remove the solid silicon deposited on the rods, and to clean the reactor.

Another significant disadvantage of the prior art chemical processes for the preparation of solid silicon is that the resulting product is usually not sufficiently large grain crystalline to be directly suitable for semiconductor or solar cell applications. Therefore, the solid silicon produced by the prior art processes must be melted in a separate step and converted in a Czochralski or like crystal pulling apparatus into large grain crystalline (ideally monocrystalline) ingots, ribbons and the like. Thus, as is well appreciated by those skilled in the art, the overall prior art processes for preparing silicon solar cells require an undesirably high input of energy.

In order to overcome or alleviate the above-noted problems, a few attempts were made in the prior art to obtain molten, rather than solid, silicon in the thermal reaction process. For example, Japanese patent application laid open for public inspection on December 2, 1977, Serial No. 52-144959, describes a process wherein a bath of molten silicon (obtained from previously-prepared solid silicon of high purity) is maintained in a reaction vessel wherein trichlorosilane ($SiHCl_3$) or silicon tetrachloride ($SiCl_4$) and hydrogen gas ($H_2$) are reacted. The silicon tetrachloride ($SiCl_4$) or trichlorosilane ($SiHCl_3$) is heated to 300°—500°C, and the hydrogen gas ($H_2$) is heated to 1200°—1600°C prior to introduction into the reaction vessel. The temperature is maintained in the gas containing part of the reaction vessel between 1050° to 1150°C so that solid elemental silicon is formed in the vessel by the reaction of the gases. The solid silicon, however, falls into the bath of molten silicon where it melts. A readily apparent disadvantage of the just-described process is that it is not suitable for production of silicon from silane ($SiH_4$), because silane would already start significant thermal decomposition while being preheated prior to introduction into the reaction vessel. Furthermore, the reactants used in the process provide elemental silicon only in a relatively low yield. Still further, the process is batchwise, rather than continuous, in the sense that the gaseous reactants must be allowed to dwell in the reactor for a relatively long time to reach equilibrium. Perhaps for these and other reasons, according to the best knowledge of the present inventor, this prior art process has not gained even moderate industrial acceptance.

United States Patent Application Serial No. 126,063 filed on February 29, 1980 (US—A—4343772) represents an attempt for production of molten silicon in a continuously operating reactor by thermal reaction of a suitable silicon containing precursor gas. In accordance with this disclosure, a precursor gas, such as silane, flows in an outer forwardly moving vortex in a spiral flow reactor. A by-product gas, such as hydrogen, moves in an inner, rearwardly moving vortex. The walls of the reactor are maintained at a temperature above the melting point of silicon.

Molten silicon flows downwardly on the walls of the reactor to collect in a pool wherefrom it is removed. A cooled injector tube having an internal diameter of about 0.15 cm (0.06 inches) is utilized to introduce the precursor gas tangentially relative to the interior cylindrical surface of the reactor. A vortex finder tube is disposed substantially in the center on the top of the reactor to remove the rearwardly moving vortex of the by-product gas.

The reactor described in the above-noted patent application, although designed to operate continuously for the production of molten silicon, is far from free of problems. More specifically, the injector tube is subject to frequent clogging due to formation of a solid silicon plug therein, and the emitted by-product gas contains a relatively large quantity of finely dispersed solid silicon particles.

Japanese publication JP—A—54-124 896 describes admitting a gas mixture of silane chloride and $H_2$ through a feed pipe into a container to contact molten silicon therein, and a solid rod of silicon is drawn from an opening in the container. The known reactor would be subject to problems similar to those mentioned hereinabove.

Additional disclosures relating the preparation of solar grade silicon are found in the following printed publications: Low-Cost Solar Array Project 5101-87, "Silicon Formation by Pyrolysis of Silane", Interim Report of the Continuous Flow Pyrolyzer Study, by H. Levin, Jet Propulsion Laboratory, California Institute of Technology, October 1978, and "Compatibility Studies of Various Refractory Materials in Contact with Molten Silicon," by O'Donnel et al., Jet Propulsion Laboratory, California Institute of Technology, March 1978 (JPL Publication 78-18).

In light of the foregoing, there still is a serious want in the prior art for a continuously operatable efficient process and apparatus for chemically preparing molten silicon from a gaseous starting material. The present invention provides such a process and apparatus.

## Summary of the invention

It is an object of the present invention to provide an apparatus and process for the efficient continuous production of molten silicon from a suitable silicion containing precursor gas.

It is another object of the present invention to provide an apparatus for the continuous production of molten silicon which readily withstands prolonged exposure to molten silicon.

These and other objects and advantages are attained by a reactor apparatus wherein substantially smooth flow of a suitable silicon containing precursor gas is maintained in a substantially axial direction in an elongated reactor heated to a temperature above the melting temperature of elemental silicon. Thermal reaction of the precursor gas directly yields molten silicon which flows down on the walls of the reactor to be removed from a bottom thereof in the liquid state.

In accordance with one aspect of the present invention, an inlet tube of the reactor which injects the precursor gas into the reactor is efficiently cooled to prevent thermal formation of silicon prior to entry of the precursor gas into the reactor. One side of a relatively thin septum attached to the inlet tube is substantially in the same temperature range as the inlet tube, while the other side of the septum is exposed to the interior of the reactor and is substantially in the same temperature range as the reactor. As a result, the precursor gas entering the reactor is subjected to a very quick transition in temperature with substantially total avoidance of clogging the inlet tube by formation of a solid silicon plug.

In accordance with another asepct of the present invention, the walls of the reactor are made of graphite or carbon material which have been discovered to be quickly coated during the initial exposure of the reactor to liquid silicon with a highly resistant silicon carbide layer.

The features of the present invention can be best understood, together with further objects and advantages, by reference to the following description, taken in connection with the drawings, wherein like numerals indicate like parts.

## Brief description of the drawings

Figure 1 is a schematic cross-sectional view showing the reactor apparatus of the present invention enclosed in an outer cylinder;

Figure 2 is a schematic cross-sectional view showing the reactor apparatus of the present invention;

Figure 3 is a schematic perspective view showing a precursor gas inlet tube assembly incorporated in the reactor apparatus of the present invention, and

Figure 4 is a cross-sectional view showing the precursor gas inlet tube assembly incorporated in the reactor apparatus of the present invention.

## Description of the preferred embodiment

The following specification taken in conjunction with the drawings sets forth the preferred embodiment of the present invention in such a manner that any person skilled in the chemical arts can use the invention. The embodiment of the invention disclosed herein is the best mode contemplated by the inventor for carrying out his invention in a commercial environment, although it should be understood that various modifications can be accomplished within the parameters of the present invention.

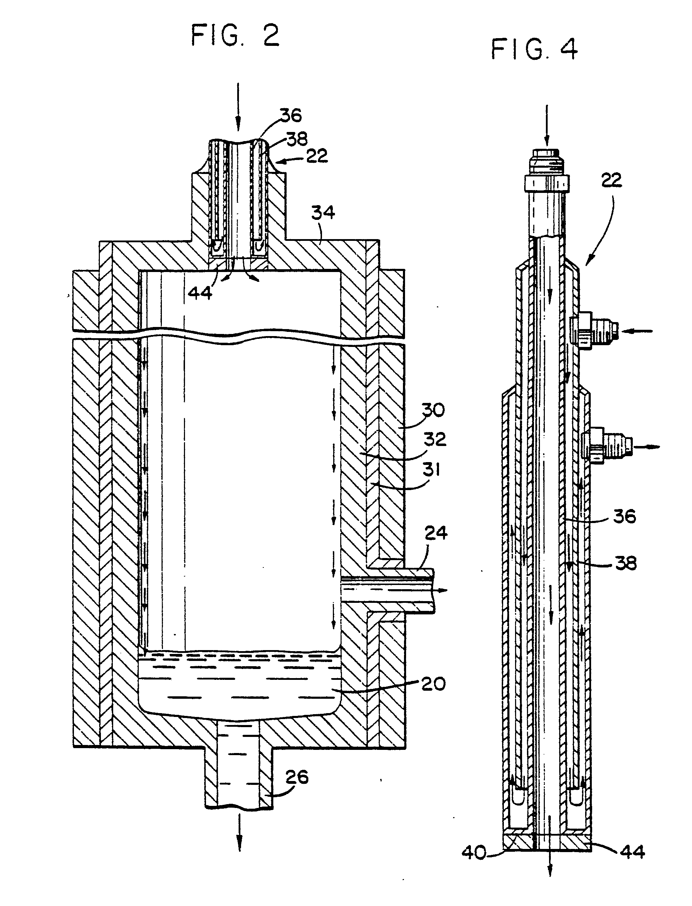

Referring now to the drawing Figures and particularly to the schematic cross-sectional views of Figures 1 and 2, the reactor apparatus 10 of the present invention is disclosed. The reactor apparatus 10 of the present invention is adapted for producing high purity molten silicon in a continuous process by thermal reaction of a suitable silicon containing precursor gas composition. Several known chemical reactions may be utilized in the novel process practiced in the reactor apparatus 10. For example, silicon may be produced in the apparatus 10 by reduction of tetrachlorosilane ($SiCl_4$) or trichlorosilane ($SiHCl_3$)

with hydrogen ($H_2$) in accordance with Equations II and III respectively.

$$SiCl_4+2H_2 \rightarrow Si+4HCl \quad \text{Equation II}$$

$$SiHCl_3+H_2 \rightarrow Si+3HCl \quad \text{Equation III}$$

However, the apparatus 10 and process of the present invention is designed most advantageously for continuous production of silicon by thermal decomposition of silane gas into silicon and hydrogen gas in accordance with Equation I (set forth in the introductory section of the present application for patent). Therefore, the following exemplary description principally describes the utilization of the thermal decomposition reaction of silane in the novel apparatus and process of the present invention. Furthermore, hereinafter the term "precursor gas" is interchangeably used with the term "silane," and the term "by-product gas" is interchangeably used with the term "hydrogen". Nevertheless, it should be kept in mind that in the event the process of the present invention utilizes alternative chemical reactions (such as the reaction of Equations II or III), the precursor gas may be other than silane, and the by-product gas or gases may be other than hydrogen.

Referring now principally to Figure 1, the reactor apparatus 10 of the present invention is shown mounted in a suitable outer cylinder 12. The principal purpose of the outer cylinder 12 is to contain the reactor apparatus 10 in an inert gas atmosphere while the reactor apparatus 10 is heated to high temperatures. The outer cylinder 12 may be constructed substantially in accordance with the state-of-the-art. The outer cylinder 12, of course, also provides thermal insulation for the reactor apparatus 10, and for that purpose walls 14 made of stainless steel encasing suitable insulating materials (not shown) which surround the reactor apparatus 10. Inlet and outlet tubes for the inert gas, which is preferably argon, are schematically shown on Figure 1 and bear the reference numerals 16 and 18, respectively.

The protective outer cylinder 12 also has suitable inlet ports for ducts carrying the precursor gas, the by-product gas, and the reaction product, molten silicon 20. On the schematic view of Figure 1, the inlet duct assembly for the precursor gas silane bears the reference numeral 22, the outlet duct for the by-product hydrogen the reference numeral 24, and the outlet duct for molten silicon the reference numeral 26. Finally, the outer cylinder 12 is provided with suitable entry ports for copper or like conduits 28 which conduct current for energizing graphite, "picket fence" type resistance heaters 30 surrounding the inner reactor apparatus 10. The resistance heaters 30 and the inner reactor apparatus 10 are separated from one another by a high temperature resistant electrical insulator 31.

Referring now principally to the schematic cross-sectional view of Figure 2, the inner reactor apparatus 10 is disclosed in detail. The reactor apparatus is an elongated hollow body; preferably, as is shown in the herein-described preferred embodiment, it is a hollow cylindrical body the length of which greatly exceeds its diameter. In a specific example of the reactor apparatus 10 of the present invention the cylindrical reactor body or reactor 32 is 157 cm long, and has an inner diameter of 7.6 cm. The relative length-to-width ratio of the reactor 32 is designed to provide a sufficiently long dwelling time for the gaseous reactants in the reactor 32 to reach thermodynamic equilibrium, which, under the conditions prevailing in the reactor 32, favors high yields of elemental silicon. In fact, in the apparatus of the present invention silane gas is converted in substantially one hundred percent (100%) yield to silicon.

In accordance with one important aspect of the invention, the reactor 32 is made of highly pure graphite or carbon material which rapidly reacts under the conditions prevailing in the reactor 32 with silicon to form silicon carbide (SiC). In fact, it was found in experience that the silicon formed in the initial stages of the operation of the reactor apparatus 10 is substantially consumed to react with the inner walls of the reactor 32. The resulting silicon carbide coating on the reactor walls is highly wettable by molten silicon, and is yet highly resistant to molten silicon. This is a very advantageous feature of the reactor apparatus 10 of the present invention, because it permits the formation of highly pure solar grade silicon substantially uncontaminated by material dissolved from the reactor walls.

For comparison, it is noted that liquid silicon is known in the art to be highly reactive and is often termed a "universal solvent.". In fact, most prior art silicon crystal pulling apparatus struggle with the problem of keeping molten silicon sufficiently free of impurities formed when the liquid silicon reacts with or dissolves the walls of a crucible, capillary die, or the like. The present invention, however, completely solves this problem by providing the readily available graphite or carbon reactor material, which during the process of the invention "self-converts" into the highly durable and liquid-silicon resistant silicon carbide. The initial stage of converting the carbon walls of the reactor 32 into silicon carbide is termed "priming" of the reactor.

Heating of the reactor body 32 is accomplished by the "picket fence" type resistant heaters 30 which surround the reactor body 32. In alternative embodiments of the reactor apparatus 10 of the present invention, other methods of heating may be utilized. The only critical feature of the invention regarding heating is that the interior of the reactor 32 and the interior walls are maintained above the melting temperature of silicon (1412°C) during the process of silicon production. Preferably, the interior of the reactor 32 is maintained above 1500°C, and most preferably it is maintained approximately between 1600° to 1800°C. At the operating temperatures of the reactor apparatus 10 (i.e., above 1412°C), the thermal

decomposition of silane gas into silicon and hydrogen is relatively rapid. Furthermore, at this temperature the thermodynamic equilibrium favors formation of elemental silicon with substantially one hundred percent (100%) yield.

Actually, the above-noted upper limit of approximately 1800°C is not a limit of the process of the present invention, because the process may be practiced at still higher temperatures. Rather, approximately 1800°C is the upper limit of temperature that the materials of the reactor apparatus 10 of the present invention can withstand without damage.

With regard to the above-noted temperature ranges of the process of the present invention, it is further noted that conversion of the carbon or graphite walls of the reactor 32 to silicon carbide occurs below 1300°C too slowly to have any practical effect on priming the reactor 32. Therefore, in the prior art reactors operating at temperatures below 1300°C the very advantageous "priming" of the reactor does not occur to a significant extent.

Experience proved the reactor apparatus 10 of the present invention to be capable of withstanding repeated temperature cycling between ambient temperature (nonoperational time of the reactor) and 1400—1800°C (operation).

The silicon formed in the reactor 32 is in the molten phase, and flows down the silicon carbide interior walls of the reactor 32 to collect in the bottom thereof. Pure, solar grade molten silicon is drained from the bottom of the reactor 32 and is advantageously utilized, without being allowed to solidify, in a Czochralski or other crystal shaping equipment (not shown) to provide silicon ingots or ribbons (not shown).

Preferably, the reactor apparatus 10 is disposed in a substantially upright position, as is shown on Figures 1 and 2, so that flow of the molten silicon 20 on the reactor walls is gravity induced.

Referring now principally to Figures 3 and 4, the silane gas inlet duct or tube assembly 22 is disclosed in detail. The inlet tube assembly 22 is particularly adapted and highly suited for supplying silane gas into the reactor 32 in a continuous and substantially nonclogging manner. As is shown on Figure 2, the inlet tube assembly 22 is disposed substantially in the center of a top wall 34 of the reactor 32 in such a manner that the inlet tube assembly 22 is located outside of the heated interior space of the reactor 32.

The inlet tube assembly 22 comprises an elongated inlet tube 36 which is connected to a supply of silane gas. The inlet tube 36 is surrounded by a jacket 38 wherethrough a cooling medium, such as water, is circulated. The end of the inlet tube 36 and the end of the jacket 38 together form a substantially flat substantially ring-shaped surface 40.

The ring-shaped surface 40 of the inlet tube assembly 22 is not directly exposed to the interior of the reactor 32. Rather, it is in contact with one side 42 of a carbon or graphite septum 44. The septum 44 comprises a relatively thin ring-shaped body which substantially conforms to the shape of the end of the inlet tube assembly 22. A second side 46 of the septum 44 is substantially flush with the interior surface of the top wall 34 of the reactor 32, as is shown on Figure 2.

The septum 44 insulates the inlet tube 36 from the high temperature of the reactor 32 and causes the silane gas which enters the reactor 32 to experience a very sharp temperature gradient. This is because one side 42 of the septum 44 is in contact with the efficiently cooled surface 40 of the inlet tube 36 and jacket 38, and is substantially in the same temperature range as the inlet tube 36. The other side 46 of the septum 44 is exposed to the heated interior of the reactor 32, and, being of a dark high emissivity material (porous carbon), is substantially in the same temperature range as the interior of the reactor 32.

During the process of the present invention, silane gas is continuously fed through the inlet tube assembly 22 into the reactor 32. The inlet tube assembly 22 is vigorously cooled by water circulated through the cooling jacket 38. In accordance with one important aspect of the present invention, the temperature of the silane gas introduced into the reactor 32 through the inlet tube 36 is kept at a temperature below 350°C. This is for the purpose of avoiding any significant thermal decomposition of the silane gas, prematurely, before entry of the silane gas into the reactor 32. In order to facilitate efficient cooling of the inlet tube assembly 22, the inlet tube 36 and the jacket 38 are made of a material of high thermal conductivity, such as copper.

The relatively thin septum 44 of carbon or graphite is highly effective to avoid thermal precipitation of fine solid silicon particles on the inlet surfaces and ensuing clogging of the inlet tube and the narrow septum 44 itself. Experience has shown that during the "priming" stage of the operation of the reactor apparatus 10, the septum 44 too reacts with the newly-formed liquid silicon to form silicon carbide.

The inlet tube assembly 22 of the reactor apparatus of the present invention operates without clogging. In contrast with the prior art inlet assembly disclosed in the above-noted U.S. patent application serial number 126,063, the internal diameter of the inlet tube 36 may be quite substantial. In the hereindescribed specific example wherein the length of the reactor is 157 cm, the internal diameter of the inlet tube 36 is approximately 1 cm, and the diameter of the septum 44 is approximately 2.2 cm.

Dwelling time of the silane gas in the heated reactor 32 is selected in such a manner that the silane-to-liquid silicon reaction proceeds to substantially reach thermodynamic equilibrium which favor complete decomposition. During the process, the silane gas and the by-product hydrogen gas flow in a substantially smooth, substantially unperturbed flow substantially axially in the reactor 32. The lower, reservoir portion of the reactor 32, containing molten silicon 20, is kept at

a temperature exceeding the melting temperature of silicon. The molten silicon may be continuously drained out of the reactor apparatus 10 through the outlet duct assembly 26 which may be constructed in accordance with state of the art. The by-product hydrogen gas leaves the reactor 32 through the hydrogen outlet duct assembly 24 which is located on a side wall 14 of the reactor 32 above the level of molten silicon 20.

Principal advantages of the above-described reactor apparatus and process of the present invention include the following. The reactor 32 is readily manufactured of relatively inexpensive pure carbon or graphite material, and yet readily "primes" or converts itself to eventually expose only non-contaminating silicon carbide for contact with the highly pure, solar grade silicon. The reactor is capable of continuous, trouble-free operation, is not subject to clogging due to buildup of solid silicon material, and does not require continuous scraping or clearing operation to keep the walls free of deposited hard crust of silicon.

The above-described specific embodiment of the reactor apparatus 10 is capable of producing several kilograms (up to 15 Kg) of solar grade molten silicon per hour. For a still larger scale silicon producing plant a still larger embodiment of the reactor apparatus 10 of the present invention may be utilized. Alternatively, and preferably several reactors of approximately of the above-noted specific dimensions may be operated simultaneously.

Furthermore, the molten silicon chemically obtained in the process of the present invention may be directly fed into a Czochralski or other crystal shaping apparatus (not shown), eliminating the need for remelting of solid silicon.

Several modifications of the above-described apparatus and process may become readily apparent to those skilled in the art in light of the above disclosure. Therefore, the scope of the present invention should be interpreted solely from the following claims.

**Claims**

1. A reactor apparatus (10) for making elemental silicon by thermal reaction of a silicon containing precursor gas such as silane, to yield silicon and a by-product gas, such as hydrogen, the apparatus comprising:

a reactor (32) having walls defining a reactor space, the walls being essentially non-reactive with molten silicon;

heating means (30) for heating the walls of the reactor so as to provide an internal temperature in the reactor space which exceeds the melting temperature of silicon; and

by-product gas outlet means (24) for outletting the by-product gas from the reactor space; characterized by cooled precursor gas inlet means (22) located outside said reaction chamber and operatively associated with the reactor for introducing the precursor gas into the reactor space and for keeping the temperature of the precursor gas below thermal decomposition temperature of the precursor gas until said precursor gas enters the heated reactor space;

septum means (44) in contact on one side thereof with the cooled inlet means and exposed on another side thereof to the heated reactor space, the septum means being adapted for being at a temperature above the melting point of silicon on the exposed side thereof; and

molten silicon outlet means (26) operatively associated with the reactor for outletting the produced molten silicon (20) from the reactor, the precursor gas inlet means and the by-product gas outlet means being disposed relative to one another so as to provide a substantially smooth flow of the precursor gas in the reactor.

2. The reactor apparatus of Claim 1, characterized in that the heating means (30) are adapted for maintaining the internal temperature approximately between 1500—1800°C.

3. The reactor apparatus of Claim 1, characterized in that the walls of the reactor (32) comprise carbon or graphite material capable of rapidly reacting with molten silicon to convert to silicon carbide.

4. The reactor apparatus of Claim 1, characterized in that the reactor (32) comprises a cylinder.

5. The reactor apparatus of any one of Claims 1 to 4, characterized in that the reactor (32) comprises a substantially upright-standing elongated hollow body, and wherein the inlet means (22) are adapted for introducing the precursor gas substantially on top of the elongated body to provide a substantially axial flow of gas therein.

6. The reactor apparatus of Claim 5, characterized in that the molten silicon outlet means (26) are adapted for permitting gravity-induced outflow of molten silicon substantially from the bottom of the elongated body.

7. The reactor apparatus of Claim 1, characterized in that the septum means (44) comprise an annular body of carbon or graphite.

8. The reactor apparatus of Claim 1, characterized in that the inlet means (22) comprise a copper tube (36) provided with jacket means (38) for circulating a cooling medium in the jacket means.

9. A reactor apparatus according to Claim 1 for thermal decomposition of silane gas directly into molten silicon, the apparatus characterized by

said reactor (32) being an elongated reactor having walls made of carbon or graphite material;

said inlet means (22) being for introducing a gas composition containing at least a significant percentage of silane gas into the reactor (32) for a substantially smooth substantially axial flow in said reactor, the inlet means (22) being located outside the reactor chamber and also comprising cooling means (38) for maintaining the gas composition at a temperature below the decomposition temperature of silane gas until the gas composition is in the heated reactor space;

septum means (44) in contact on one side

thereof with the cooled inlet means (22) and exposed on another side thereof to the heated reactor space, the septum means being adapted for being at a temperature above the melting point of silicon on the exposed side thereof; and

said gas outlet means (24) being operatively associated with the reactor (32) and disposed remotely from said inlet means (22) for outletting any unreacted gas and by-product gas from said reactor space while said substantially axial gas flow is maintained.

10. A process for directly producing molten silicon (20) by thermal reaction of a silicon containing precursor gas composition in a reaction chamber (32), the process characterized by comprising the steps of:

maintaining said gas composition in a first temperature range below the thermal reaction temperature of said gas composition;

maintaining the reaction chamber in a second temperature range above the melting point of silicon;

abruptly raising the temperature of said gas composition from said first temperature range to said second temperature range by introducing said gas composition through a cooled inlet means (22) located outside said reaction chamber through an insulating septum (44) having one face against said cooled inlet means (22) and having the opposite face exposed to said reaction chamber;

maintaining a substantially smooth axial flow of the precursor gas composition in the reaction chamber while permitting the precursor gas composition to undergo thermal reaction to yield molten silicon (20);

allowing unreacted precursor gas composition and by-product gas to exit from the reaction chamber.

11. The process of Claim 10, characterized in that the second temperature range is approximately 1500—1800°C.

12. The process of Claim 11, characterized in that the second temperature range is approximately 1600—1800°C.

13. The process of Claim 10, characterized in that the first temperature range is below 350°C.

14. The process of Claim 10, characterized in that the precursor gas composition comprises silane.

15. The process of Claim any one of Claim 10 to 14, characterized in that the substantially smooth flow is a substantially axial downward flow substantially parallel with the Earth's gravitational force field.

16. A process according to Claim 10, characterized by comprising the steps of:

maintaining the interior temperature of the reactor (32) approximately between 1500—1800°C.

maintaining a gas composition including at least a significant amount of silane gas below approximately 350°C.

abruptly raising the temperature of the gas composition from below 350°C. to above approximately 1500°C. by suddenly introducing the gas composition into the interior of the reactor (32) from a cooled inlet means (22) outside the interior of the reactor through an insulating septum (44) having one face against said cooled inlet means (22) and having the opposite face exposed to said reactor (32);

maintaining a substantially smooth substantially axial flow of the gas composition in the reactor whereby the silane gas thermally decomposes into hydrogen gas and solid silicon particles that quickly become molten whereby the inner carbon or graphite walls of the reactor (32) rapidly react with the molten silicon to convert to silicon carbide;

allowing the unreacted gas composition and by-product hydrogen gas to exit from the reactor; and

allowing the produced molten silicon to exit from the reactor in a liquid state.

## Patentansprüche

1. Reaktoranlage (10) zum Erzeugen von elementarem Silicium durch eine Thermoreaktion eines siliciumhaltigen Vorstufengases, wie Silan, wobei Silicium und ein Nebenproduktgas, wie Wasserstoff, erzeugt werden, gekennzeichnet durch:

einen Reaktor (32) mit einen Reaktionsraum begrensenden Wänden, die gegenüber schmelzflüssigem Silicium im wesentlichen inert sind;

eine Heizeinrichtung (30) zum Erhitzen der Wände des Reaktors derart, daß in dem Reaktorraum einen Innentemperatur erzeugt wird, die über der Schmelztemperatur des Siliciums liegt; und

einer Nebenproduktgas-Auslaßeinrichtung (24) zum Abziehen des Nebenproduktgases von dem Reaktorraum;

gekennzeichnet durch

eine gekühlte Vorstufengas-Einlaßeinrichtung (22), die außerhalb des Reaktorraums angeordnet ist und mit dem Reaktor derart in Wirkungsbeziehung steht, daß side das Vorstufengas in den Reaktorraum derart einleitet, daß die Temperatur des Vorstufengases biz zu dessen Eintritt in den geheizten Reaktorraum unter der Thermozersetzungstemperatur des Vorstufengases liegt;

eine Trennwandanordnung (44), die auf der einen Seite mit der gekühlten Einlaßeinrichtung in Berührung steht und auf der anderen Seite zu dem geheizten Reaktorraum hin freiliegt und die geeignet ist, auf dieser freiliegenden Seite eine Temperatur über der Schmelztemperatur des Siliciuma anzunehmen; und

eine mit dem Reaktor in Wirkungsbeziehung stehende Auslaßeinrichtung (24) für schmelzflüssiges Silicium, zum abziehen des erzeugten schmelzflüssigen Siliciums von dem Reaktor,

wobei die Vorstufengas-Einlaßeinrichtung und die Nebenproduktgas-Auslaßeinrichtung relativ zueinander so angeordnet sind, daß sie eine im wesentlichen glatte Strömung des Vorstufengases in dem Reaktor bewirken.

2. Reaktoranlage nach Anspruch 1, dadurch gekennzeichnet, daß die Heizeinrichtung (30) zum Aufrechterhalten einer Innentemperatur zwischen etwa 1500 und 1800°C geeignet ist.

3. Reaktoranlage nach Anspruch 1, dadurch gekennzeichnet, daß die Wände des Reaktors (32) mindestens teilweise aus einem Kohlenstoff oder Graphit bestehen, der zur schnellen Reaktion mit schmelzflüssigem Silicium unter Bildung von Siliciumcarbid geeignet ist.

4. Reaktoranlage nach Anspruch 1, dadurch gekennzeichnet, daß der Reaktor (32) einen Zylinder bildet.

5. Reaktoranlage nach einem der Ansprüche 1 bis 4, dadurch gekennzeichnet, daß der Reaktor (32) einen im wesentlichen aufrechtstehenden, langgestreckten Hohlkörper besitzt und die Einlaßeinrichtung (22) geeignet ist, das Vorstufengas im wesentlichen am oberen Ende des langgestreckten Körpers in diesen einzuleiten, so daß in diesem das Gas im wesentlichen axial strömt.

6. Reaktoranlage nach Anspruch 5, dadurch gekennzeichnet, daß die Auslaßeinrichtung (26) für schmelzflüssiges Silicium ein unter Schwerkraftwirkung erfolgendes Ausströmen des schmelzflüssigen Siliciums im wesentlichen am unteren Ende des langgestreckten Körpers gestattet.

7. Reaktoranlage nach Anspruch 1, dadurch gekennzeichnet, daß die Trennwand (44) mindestens teilweise aus einem Ringkörper aus Kohlenstoff oder Graphit besteht.

8. Reaktoranlage nach Anspruch 1, dadurch gekennzeichnet, daß ein Einlaßeinrichtung (22) ein Kupferrohr (36) besitzt, das von einem Mantel (38) zum Umwälzen eines Kühlmittels in dem Mantel versehen ist.

9. Reaktoranlage nach Anspruch 1 zur thermischen Zersetzung von Silangas direkt zu schmelzflüssigem Silicium, dadurch gekennzeichnet, daß

der Reaktor (32) ein langgestreckter Reaktor mit Wänden aus Kohlenstoff oder Graphit ist;

die Einlaßeinrichtung (22) zum Einleiten einer Gaszusammensetzung, die mindestens einen beträchtlichen Prozentsatz Silan enthält, in den Reaktor (32) dient, und zwar derart, daß in dem Reaktor eine glatte, im wesentlichen axiale Strömung erzeugt wird, wobei die Einlaßeinrichtung (22) außerhalb des Reaktorraums angeordnet ist und ferner eine Kühleinrichtung (38) besitzt, die die Gaszusammensetzung bis zu ihrem Eintritt in den geheizten Reaktorraum auf einer Temperatur unterhalb der Zersetzungstemperatur von Silangas hält;

eine Trennwand (44) vorgesehen ist, die auf ihrer einen Seite mit der gekühlten Einlaßeinrichtung (22) in Berührung steht und auf einer anderen Seite zu dem geheizten Reaktorraum hin freiliegt und auf der freiliegenden Seite eine Temperatur über der Schmelztemperatur des Siliciums annehmen kann; und

die Gasauslaßeinrichtung (24) mit dem Reaktor (32) in Wirkungsbeziehung steht und in beträchtlichem Abstand von der Einlaßeinrichtung (22) angeordnet ist und dazu dient, nicht umgesetztes Gas und Nebenproduktgas von dem Reaktorraum abzuziehen, während die im wesentlichen axiale Gasströmung aufrechterhalten wird.

10. Verfahren zum direkten Erzeugen von schmelzflüssigem Silicium (20) durch eine Thermoreaktion einer siliciumhaltigen Vorstufengaszusammensetzung in einer Reaktionskammer (32), gekennzeichnet durch folgende Schritte:

die genannte Vorstufengaszusammensetzung wird in einem ersten Temperaturbereich gehalten, der unter der Thermoreaktionstemperatur der Gaszusammensetzung liegt;

die Reaktionskammer wird in einem zweiten Temperaturbereich gehalten, der über der Schmelztemperatur des Siliciums liegt;

zum plötzlichen Erhöhen der Temperatur der Gaszusammensetzung aus dem ersten Temperaturbereich in den zweiten Temperaturbereich wird die Gaszusammensetzung durch eine außerhalb der Reaktionskammer angeordnete, gekühlte Einlaßeinrichtung (22) und durch eine isolierende Trennwand (44) geführt, die auf einer Fläche an der gekühlten Einlaßeinrichtung (22) anliegt und deren entgegengesetzte Fläche zu der Reaktionskammer hin freiliegt;

in der Reaktionskammer wird eine im wesentlichen glatte, axiale Strömung der Vorstufengaszusammensetzung aufrechterhalten und diese dabei einer Thermoreaktion unter Bildung von schmelzflüssigem Silicium unterworfen (20);

nicht umgesetzte Vorstufengaszusammensetzung und Nebenproduktgas werden aus der Reaktionskammer abgezogen.

11. Verfahren nach Anspruch 10, dadurch gekennzeichnet, daß der zweite Temperaturbereich von etwa 1500 bis 1800°C geht.

12. Verfahren nach Anspruch 11, dadurch gekennzeichnet, daß der zweite Temperaturbereich von etwa 1600 bis 1800°C geht.

13. Verfahren nach Anspruch 10, dadurch gekennzeichnet, daß der erste Temperaturbereich unter 350°C liegt.

14. Verfahren nach Anspruch 10, dadurch gekennzeichnet, daß die Vorstufengaszusammensetzung mindestens teilweise aus Silan besteht.

15. Verfahren nach einem der Ansprüche 10 bis 14, dadurch gekennzeichnet, daß die im wesentlichen glatte Strömung eine im wesentlichen axial abwärtsgerichtete Strömung ist, die zu dem Schwerefeld der Erde im wesentlichen parallel ist.

16. Verfahren nach Anspruch 10, gekennzeichnet, durch folgende Schritte:

die Innentemperatur des Reaktors (32) wird zwischen ungefährt 1500 und 1800°C aufrechterhalten;

eine mindestens in einer beträchtlichen Menge Silan enthaltende Gaszusammensetzung wird unter etwa 350°C gehalten;

zum plötzlichen Erhöhen der Gaszusammensetzung von einer Temperatur unter 350°C auf eine Temperatur über etwa 1500°C wird die Gaszusammensetzung plötzlich in das Innere eines Reaktors (32) von einer außerhalb des Innern des Reaktors angeordneten, gekühlten Einlaßeinrichtung (22) durch eine isolierende Trennwand (44) hindurch

eingeleitet, deren eine Fläche an der gekühlten Einlaßeinrichtung (22) anliegt und deren entgegengesetzte Fläche zu dem Reaktor (32) hin freiliegt;

in dem Reaktor wird eine im wesentlichen glatte, im wesentlichen axiale Strömung der Gazusammensetzung aufrechterhalten, so daß das Silangas zu Wasserstoffgas und festen Siliciumteilchen thermozersetzt wird, die schnell schmelzen, und die aus Kohlenstoff oder Graphit bestehenden Innenwände des Reaktors (32) schnell mit dem schmelzflüssigen Silicium unter Bildung von Siliciumcarbid reagieren;

die nicht umgesetzte Gaszusammensetzung und das aus Wasserstoff bestehende Nebenproduktgas wird aus dem Reaktor abgezogen; und

das erzeugte schmelzflüssige Silicium wird im flüssigen Zustand von dem Reaktor abgezogen.

**Revendications**

1. Appareil de réaction (10) pour fabriquer du silicium élémentaire par réaction thermique d'un précurseur gazeux contenant du silicium tel que le silane, pour donner du silicium et un sous-produit gazeux tel que l'hydrogène, l'appareil comprenant:

un réacteur (32) ayant des parois définissant un espace de réaction, les parois étant pratiquement inertes vis-à-vis du silicium fondu;

un dispositif chauffant (30) pour chauffer les parois du réacteur de manière à donner une température interne dans l'espace de réaction qui dépasse la température du fusion du silicium; et

une tubulure de sortie (24) pour l'évacuation du sous-produit gazeux de l'espace de réaction; caractérisé par une tubulure d'entrée refroidie (22) du précurseur gazeux située à l'extérieur de ladite chambre de réaction et associée en fonctionnement avec le réacteur pour introduire le précurseur gazeux dans l'espace de réaction et pour maintenir la température du précurseur gazeux au-dessous de la température de décomposition thermique du précurseur gazeus jusqu'à ce que ledit précurseur gazeux pénètre dans l'espace de réaction chauffé;

un diaphragme (44) en contact sur une de ses faces avec la tubulure d'entrée refroidie et exposé sur son ature face à l'espace de réaction chauffé, le diaphragme étant adapté pour être à une température supérieure au point de fusion du silicium sur sa face exposée; et

un tubulure de sortie (26) du silicium fondu associée en fonctionnement avec le réacteur pour l'évacuation du réacteur du silicium fondu (20) produit, la tubulure d'entrée du précurseur gazeux et la tubulure de sortie du sous-produit gazeux étant disposées l'une par rapport à l'autre de manière à produire un écoulement pratiquement régulier du précurseur gazeux dans le réacteur.

2. Appareil de réaction selon la revendication 1, caractérisé en ce que le dispositif chauffant (30) est adapté pour maintenir la température interne dans la gamme d'environ 1500—1800°C.

3. Appareil de réaction selon la revendication 1, caractérisé en ce que les parois du réacteur (32) comprennent du carbone ou du graphite capable de réagir rapidement avec le silicium fondu pour se transformer en carbure de silicium.

4. Appareil de réaction selon la revendication 1, caractérisé en ce que le réacteur (32) consiste en un cylindre.

5. Appareil de réaction selon l'une quelconque des revendications 1 à 4, caractérisé en ce que le réacteur (32) comprend un corps creux allongé pratiquement vertical et dans lequel la tubulure d'entrée (22) est adaptée pour introduire le précurseur gazeux pratiquement au sommet du corps allongé pour y produire un écoulement gazeux pratiquement axial.

6. Appareil de réaction selon la revendication 5, caractérisé en ce que la tubulure de sortie (26) du silicium fondu est adaptée pour permettre l'écoulement par gravité du silicium fondu pratiquement à partir du fond du corps allongé.

7. Appareil de réaction selon la revendication 1, caractérisé en ce que le diaphragme (44) consiste en un corps annulaire de carbone ou de graphite.

8. Appareil de réaction selon la revendication 1, caractérisé en ce que la tubulure d'entrée (22) consite en un tube de cuivre (36) muni d'une chemise (38) pour la circulation d'un milieu réfrigérant dans la chemise.

9. Appareil de réaction selon la revendication 1 pour la décomposition thermique de silane gazeux directement en silicium fondu, l'appareil étant caractérisé en ce que

ledit réacteur (32) est un réacteur allongé ayant des parois en carbone ou en graphite'

ladite tubulure d'entrée (22) est destinée à l'introduction d'une composition gazeuse contenant au moins un pourcentage notable de silane gazeux dans le réacteur (32) pour un écoulement pratiquement axial, pratiquement régulier dans ledit réacteur, la tubulure d'entrée (22) étant située à l'extérieur de chambre de réaction et comprenant également un dispositif réfrigérant (38) pour maintenir la composition gazeuse à une température inférieure à la température de décomposition du silane gazeux jusqu'à ce que la composition gazeuse soit dans l'espace de réaction chauffé;

un diaphragme (44) se trouve en contact sur une de ses faces avec la tubulure d'entrée (22) refroidie et exposé sur son autre face à l'espace de réaction chauffé, le diaphragme étant adapté pout être sur sa face exposée à une température supérieure au point de fusion du silicium; et

ladite tubulure de sortie de gaz (24) est associée en fonctionnement avec le réacteur (32) et éloignée de ladite tubulure d'entrée (22) pour évacuer dudit espace de réaction tout le gaz n'ayant pas réagi et le sous-produit gazeux, tout en maintenant ledit écoulement gazeux pratiquement axial.

10. Procédé pour la production directe de silicium fondu (20) par réaction thermique d'une composition gazeuse de précurseur contenant du silicium dans une chambre de réaction (32), le procédé étant caractérisé en ce que:

on maintient ladite composition gazeuse dans une première gamme de températures au-dessous de la température de réaction thermique de ladite composition gazeuse;

on maintient la chambre de réaction dans une second gamme de températures au-dessus du pointe de fusion du silicium;

on élève brusquement la température de ladite composition gazeuse de ladite première gamme de températures à ladite seconde gamme de températures en introduisant ladite composition gazeuse à travers une tubulure d'entrée refroidie (22) située à l'extérieur de ladite chambre de réaction à travers un diaphragme isolant (44) ayant une face du côté de ladite tubulure d'entrée refroidie (22) et la face opposée exposée à ladite chambre de réaction;

on maintient un écoulement axial pratiquement régulier de la composition de précurseur gazeux dans la chambre de réaction tout en permettant la réaction thermique de la composition de précurseur gazeux pour donner du silicium fondu (20);

on fait sortie de la chambre de réaction la composition de précurseur n'ayant pas réagi et le sous-produit gazeux.

11. Procédé selon la revendication 10, caractérisé en ce que la second gamme de températures est d'environ 1500—1800°C.

12. Procédé selon la revendication 11, caractérisé en ce que la seconde gamme de températures est d'environ 1600—1800°C.

13. Procédé selon la revendication 10, caractérisé en ce que la première gamme de températures est inférieure à 350°C.

14. Procédé selon la revendication 10, caractérisé en ce que la composition de précurseur gazeux consiste en silane.

15. Procédé selon l'une quelconque des revendications 10 à 14, caractérisé en ce que l'écoulement pratiquement régulier est un écoulement de haut en bas, pratiquement axial, pratiquement parallèle au champ de force de la gravité terrestre.

16. Procédé selon la revendication 10, caractérisé en ce que

on maintient la température interne du réacteur (32) dans la gamme d'environ 1500—1800°C;

on maintient une composition gazeuse contenant au moins une quantité importante de silane gazeux au-dessous d'environ 350°C;

on élève brusquement la température de la composition gazeuse de moins de 350°C à plus d'environ 1500°C en introduisant soudainement la composition gazeuse à l'intérieur du réacteur (32) depuis une tubulure d'entrée refroidie (22), située à l'extérieur de l'intérieur du réacteur, à travers un diaphragme isolant (44) ayant une face du côté de la tubulure d'entrée refroidie (22) et la face opposée exposée audit réacteur (32);

on maintient un écoulement pratiquement axial, pratiquement régulier de la composition gazeuse dans le réacteur de sortie que le silane gazeux se décompose thermiquement en gaz hydrogène et particules de silicium solides qui fondent rapidement, de sorte que les parois internes en carbone ou en graphite du réacteur (32) réagissent rapidement avec le silicium fondu pour se transformer en carbure de silicium;

on fait sortie du réacteur la composition gazeuse n'ayant pas réagi et l'hydrogène gazeux formé comme sous-produit; et

on fait sortie du réacteur le silicium fondu produit à l'état liquide.

FIG. 1

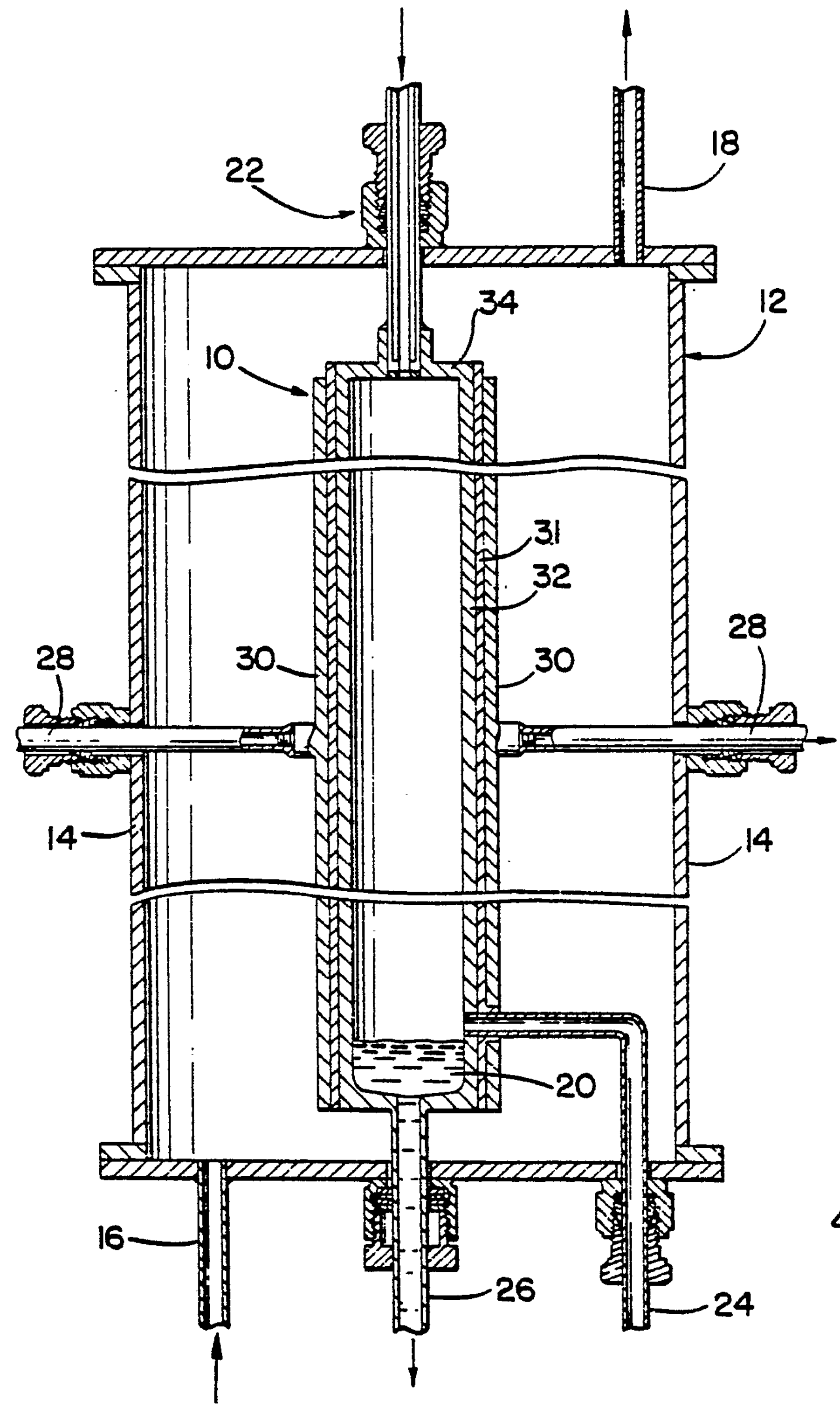


FIG. 3

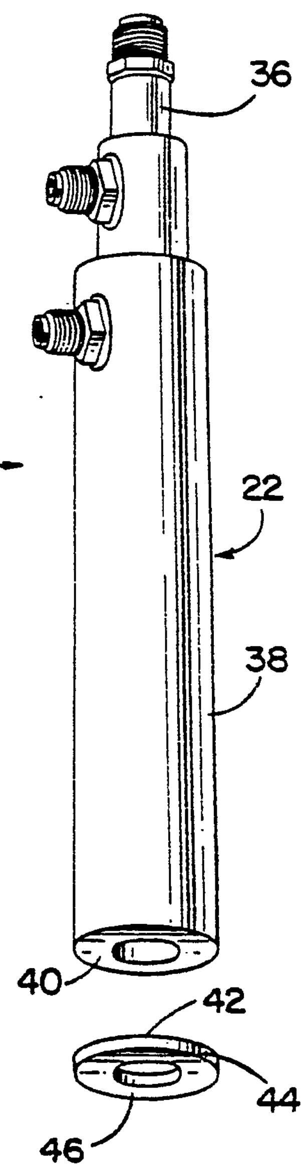

FIG. 2

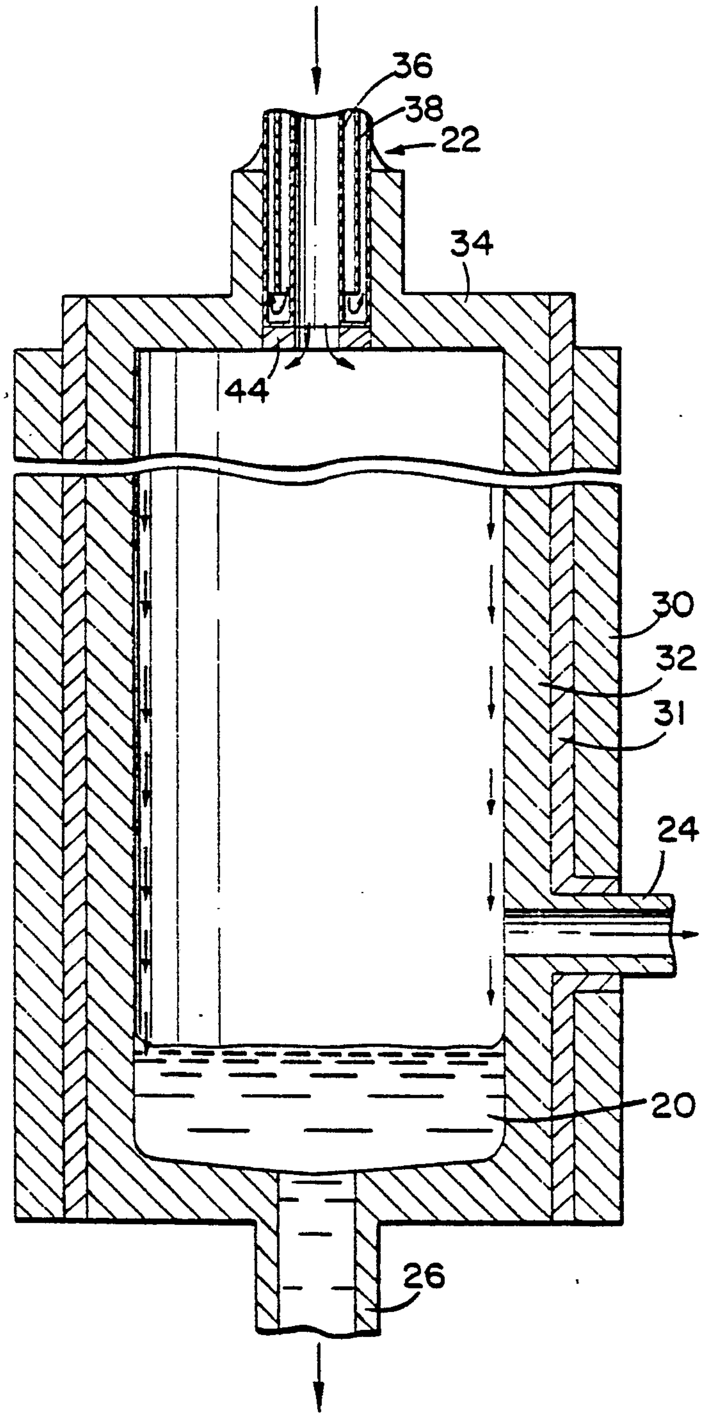


FIG. 4